# EUROPEAN PATENT SPECIFICATION

(11) **EP 2 338 454 B1**
(45) Date of publication and mention of the grant of the patent: **10.02.2016**
(21) Application number: 09815942.9
(22) Date of filing: 11.03.2009
(51) Int. Cl.: A61G 3/06, B60P 3/00, A61G 5/00

(54) **LIFTER FOR WHEELCHAIR**
HEBEVORRICHTUNG FÜR EINEN ROLLSTUHL
DISPOSITIF DE LEVAGE POUR FAUTEUIL ROULANT

(30) Priority: 25.09.2008 JP 2008246227
(43) Date of publication of application: 29.06.2011
(73) Proprietor: Toyota Shatai Kabushiki Kaisha, Kariya-shi Aichi 448-0002 (JP)
(72) Inventor: TANIMOTO, Ryuichi, Kariya-shi Aichi 448-0002 (JP); YOSHITOME, Tomohiro, Kariya-shi Aichi 448-0002 (JP); TAGUCHI, Haruo, Kariya-shi Aichi 448-0002 (JP); AWASAKI, Tooru, Kariya-shi Aichi 448-0002 (JP); YAMASHITA, Makoto, Kariya-shi Aichi 448-0002 (JP)
(74) Representative: Dempster, Benjamin John Naftel
(86) International application number: PCT/JP2009/054655
(87) International publication number: WO 2010/035523

(56) References cited:
- EP-A2- 0 955 029
- JP-A- 8 175 382
- JP-A- 2001 129 023
- JP-A- 2003 126 159
- JP-A- 2003 204 995
- JP-A- 2003 261 714
- JP-A- 2005 264 986

## Description

### TECHNICAL FIELD

The present invention relates to a wheelchair lifter including a platform that is constructed to receive a wheelchair in a desired position thereon and to secure the same thereto and that is capable of being received in a cabin of a vehicle, and a moving mechanism that is capable of moving the platform between a retracted position inside the cabin and a wheelchair loading/unloading position on the ground.

### BACKGROUND ART

A technique regarding a related conventional wheelchair lifter is described in JP-A-2003/126159 from which may be derived the pre-characterizing portion of claim 1 appended hereto.

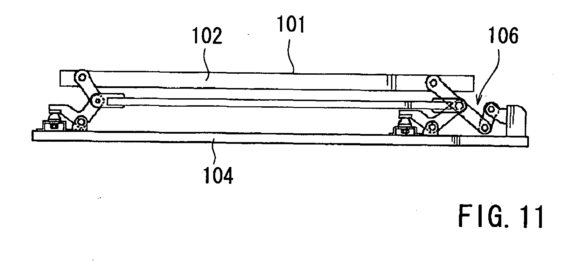

As shown in FIG. 11, a platform of a wheelchair lifter includes an upper frame 102 having a platform surface 101 and a lower frame 104 disposed below the upper frame 102 in parallel therewith. The upper frame 102 and the lower frame 104 are connected to each other via a link mechanism 106 such that the upper frame 102 is vertically movable with respect to the lower frame 104. Further, several elastic structural members (not shown) are disposed between the upper frame 102 and the lower frame 104.

According to a structure described above, vertical vibration transmitted to the lower frame 104, for example, while a vehicle is moving on a rough road, can be absorbed by the elastic structural members, so as to be prevented from being easily transmitted to the upper frame 102. That is, the upper frame 102 (the platform surface) can be prevented from being vibrated. Thus, a passenger sitting on the wheelchair can have a comfortable ride.

### DISCLOSURE OF THE INVENTION

### PROBLEM TO BE SOLVED BY THE INVENTION

However, in the platform described above, the upper frame 102 having the platform surface 101 is wholly supported by the link mechanism 106 and the several elastic structural members. That is, the platform has a large-scale vibration absorption mechanism. This may lead to increased cost.

The present invention has been made in order to solve the above-mentioned problem. It is an object of the present invention to give the passenger sitting on the wheelchair a comfortable ride without increasing cost.

### MEANS FOR SOLVING THE PROBLEM

According to the invention there is provided a wheelchair lifter including a platform that is constructed to receive a wheelchair in a desired position thereon and to secure the same thereto and that is capable of being received in a cabin of a vehicle, and a moving mechanism that is capable of moving the platform between a retracted position inside the cabin and a wheelchair loading/unloading position on the ground, comprising a right and left pair of wheel support portions on which right and left wheels of the wheelchair are respectively positioned when the wheelchair is secured to the platform, the wheel support portions being provided to a platform surface of the platform, and a wheelchair detection means that is capable of detecting that the wheel support portions are displaced downwardly relative to the platform surface and identifying that the wheelchair is positioned on the wheel support portions, wherein the right and left pair of wheel support portions are constructed to absorb vertical vibration of the vehicle, characterized in that the moving mechanism changes a moving speed of the platform to a normal speed when the wheelchair detection means detects the wheelchair, and wherein the moving mechanism changes the moving speed of the platform to a speed higher than the normal speed when the wheelchair detection means does not detect the wheelchair.

According to the present invention, the right and left pair of wheel support portions provided to the platform surface are constructed to absorb vertical vibration of the vehicle. Therefore, even if the vehicle is lifted, for example, while traveling on a rough road, the wheel support portions can absorb the vertical vibration caused by the lifting. As a result, the vibration generated, for example, while the vehicle is moving on the rough road, can be prevented from being easily transmitted to the wheelchair. Thus, a passenger sitting on the wheelchair can have a comfortable ride.

Only the right and left wheel support portions are constructed to absorb the vibration. Therefore, a cost reduction can be performed compared with a conventional platform in which the whole platform surface is constructed to be prevented from being vibrated.

Thus, when the wheelchair is loaded on the platform, the platform can be moved at the normal speed. To the contrary, when the wheelchair is not loaded on the platform, the platform can be moved at the high speed. Therefore, a moving time of the platform can be reduced than when the platform is always moved at the normal speed.

In an embodiment of the invention, the wheel support portions include wheel support plates on which the wheels of the wheelchair are positioned, support mechanisms supporting the wheel support plates so as to be vertically movable relative to the platform surface, spring members biased in directions that move the wheel support plates upwardly when the wheel support plates are pressed downwardly relative to the platform surface due to a weight of the wheelchair, and lock mechanisms constructed to be capable of locking the wheel support plates such that the wheel support plates cannot be pressed down relative to the platform surface and capable of unlocking the same.

According to this embodiment, the wheel support plates can be locked by the lock mechanisms, so as to not be pressed down relative to the platform surface. Therefore, when the wheelchair is secured to the platform while the wheels of the wheelchair are respectively positioned on the wheel support plates, the wheel support plates can be prevented from being pressed down against spring forces of the spring members by a securing force applied to the wheelchair.

Further, upon unlocking the wheel support plates locked by the lock mechanisms after the wheelchair is secured to the platform, the spring members can function. Thus, the wheelchair can be prevented from being vibrated.

In an embodiment of the invention, the wheel support portions include elastic blocks that are constructed to fill in recessed portions formed in the platform surface.

Therefore, the wheelchair can be prevented from being vibrated with a simplified structure.

In an embodiment of the invention, each of the elastic blocks is constructed of a plurality of laminated layers. Upper layers are made of relatively hard materials. Lower layers are made of relatively soft materials.

Such a structure can have increased vibration preventing performance than when each of the elastic blocks is constructed of a single layer.

In an embodiment of the invention, the moving mechanism include a right and left pair of four-joints link mechanisms, hydraulic cylinders that are capable of vertically rotating the four-joints link mechanisms, and electromagnetic valves that are capable of changing oil flow rates fed to the hydraulic cylinders between higher flow rates and lower flow rates.

Therefore, the moving speed of the platform can be changed with a simplified structure.

### EFFECTS OF THE INVENTION

According to the present invention, it is possible to give the passenger sitting on the wheelchair a comfortable ride without increasing cost.

### BRIEF DESCRIPTION OF THE DRAWINGS

FIG. 1 is a perspective view of a wheelchair lifter according to Embodiment 1 of the present invention.
FIG. 2 is a vertical sectional view of a platform used in the wheelchair lifter (a sectional view taken along line II-II of FIG. 3).
FIG. 3 is a plan view of the platform.
FIG. 4 is a set of schematic illustrations (figure A and figure B) illustrating function of the platform.
FIG. 5 is a vertical sectional view of a modified form of the platform.
FIG. 6 is a vertical sectional view of a modified form of the platform.
FIG. 7 is a set of vertical sectional views (figure A) and (figure B) of a platform used in a wheelchair lifter according to Embodiment 2 of the present invention.
FIG. 8 is a hydraulic circuit diagram of a hydraulic power unit used in a lifting/lowering link mechanism of the wheelchair lifter.
FIG. 9 is an electrical diagram that is capable of actuating an electromagnetic valve used in the hydraulic power unit.
FIG. 10 is a partially perspective view of the lifting/lowering link mechanism of the wheelchair lifter.
FIG. 11 is a vertical sectional view of a conventional platform.

### DESCRIPTION OF SYMBOLS

- 20: platform
- 22: ceiling plate
- 22u: platform surface
- 30: longitudinal sliding mechanism (moving mechanism)
- 40: lifting/lowering link mechanism (moving mechanism)
- 50: large wheel support portion (wheel support portion)
- 52: wheel support plate
- 54: hinge mechanism (support mechanism)
- 56: spring (spring member)
- 58: lock mechanism
- 60: large wheel support portion (wheel support portion)
- 61: rubber plate
- 63: rubber plate
- 64: urethane foam mat
- BK: large wheel
- K: wheelchair
- 70: wheelchair lifter
- 71: wheelchair detection sensor (wheelchair detection means)
- 82: hydraulic cylinder
- 86: electromagnetic valve

### BEST MODE FOR CARRYING OUT THE INVENTION

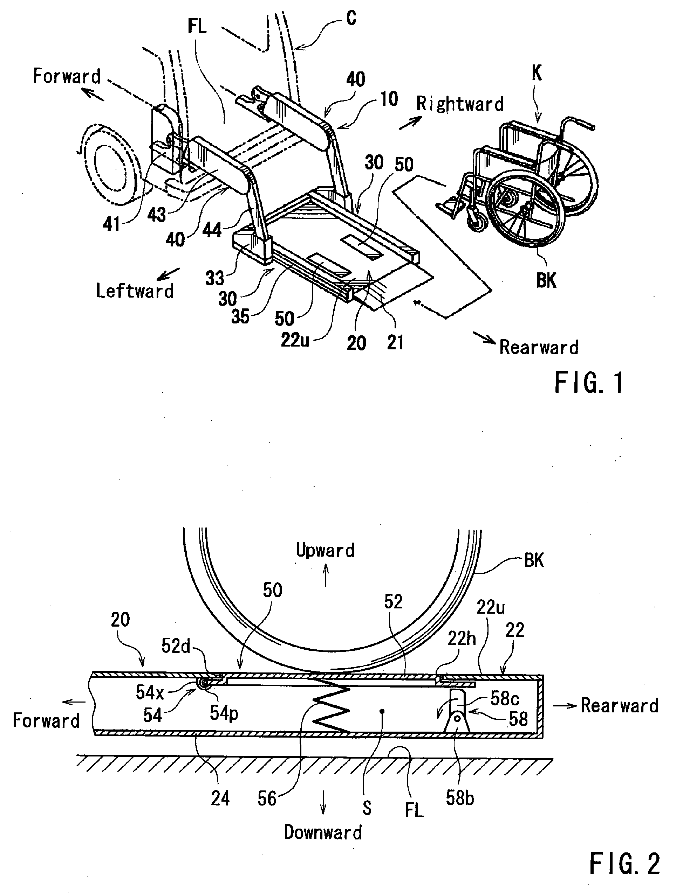

In the following, a wheelchair lifter according to a not claimed example is described with reference to FIG. 1 to FIG. 6.

Further, in the drawings, forward and rearward, rightward and leftward, and upward and downward respectively correspond to forward and rearward, rightward and leftward, and upward and downward of an automobile.

### <Outline of Wheelchair Lifter 10>

A wheelchair lifter according to this example is a wheelchair lifter that is disposed in a rear portion of a minivan-type vehicle.

The wheelchair lifter 10 is a device that is capable of moving a wheelchair K on which a passenger is sitting (which will be hereinafter simply referred to as the wheelchair K) from the ground to a rear portion of a vehicle cabin of an automobile C and capable of securing the wheelchair K in the vehicle cabin such that the wheelchair K can be used as a seat. As shown in FIG. 1, the wheelchair lifter 10 is constructed of a platform 20 on which the wheelchair K is loaded, a right and left pair of longitudinal sliding mechanisms 30 that are capable of longitudinally sliding the platform 20 between a retracted position inside the cabin and a projected position outside the cabin, and a right and left pair of lifting/lowering link mechanisms 40 that are capable of moving the platform 20 up and down between the projected position and a wheelchair loading/unloading position (FIG. 1) on the ground.

The lifting/lowering link mechanisms 40 are constructed of fixture members 41 that are disposed in both ends of a rear portion of a vehicle cabin floor FL, first links 43 that are vertically rotatably connected to the fixture members 41, second links 44 that are vertically rotatably connected to distal end portions of the first links 43, and driving portions (not shown). Further, the platform 20 is connected to distal end portions of the second links 44 via the longitudinal sliding mechanisms 30 while it is maintained in a horizontal position.

The longitudinal sliding mechanisms 30 are constructed of slide rails 35 that are disposed on right and left side surfaces of the platform 20, and a sliding mechanism main portions 33 that are capable of sliding the slide rails 35 in a vehicle longitudinal direction.

In order to board the wheelchair K into the automobile C, first, the wheelchair K is moved to a desired position on the platform 20 in the wheelchair loading/unloading position shown in FIG. 1 and is secured to the platform 20. Next, a boarding switch (not shown) of the wheelchair lifter 10 is operated. As a result, the driving portions of the lifting/lowering link mechanisms 40 are actuated, so that the right and left first links 43 can be rotated in rising directions. When the right and left first links 43 are rotated in the rising directions, the right and left second links 44 can be lifted up while they are respectively maintained in raised conditions. As a result, the platform 20 can move upwardly and toward the vehicle cabin (forwardly) while it is maintained in the horizontal position. When the platform 20 reaches a desired vertical position (a projected position) that is slightly higher than the vehicle cabin floor FL, the driving portions of the lifting/lowering link mechanisms 40 are de-actuated. In this condition, the first links 43 and the second links 44 of the lifting/lowering link mechanisms 40 and the sliding mechanism main portions 33 of the longitudinal sliding mechanisms 30 can be retracted in the vehicle cabin. Subsequently, the sliding mechanism main portions 33 of the longitudinal sliding mechanisms 30 are actuated. As a result, the platform 20 can slide forwardly from the projected position, so as to be retracted in the vehicle cabin. When the platform 20 advances to a desired position (a retracted position), the sliding mechanism main portions 33 are de-actuated. Thus, boarding of the wheelchair K is completed.

Further, in order to deboard the wheelchair K from the automobile C, a deboarding switch (not shown) of the wheelchair lifter 10 is operated. As a result, the wheelchair lifter 10 can be operated in reverse order.

Further the longitudinal sliding mechanisms 30 and the lifting/lowering link mechanisms 40 correspond to a moving mechanism.

### <Structure of Platform 20>

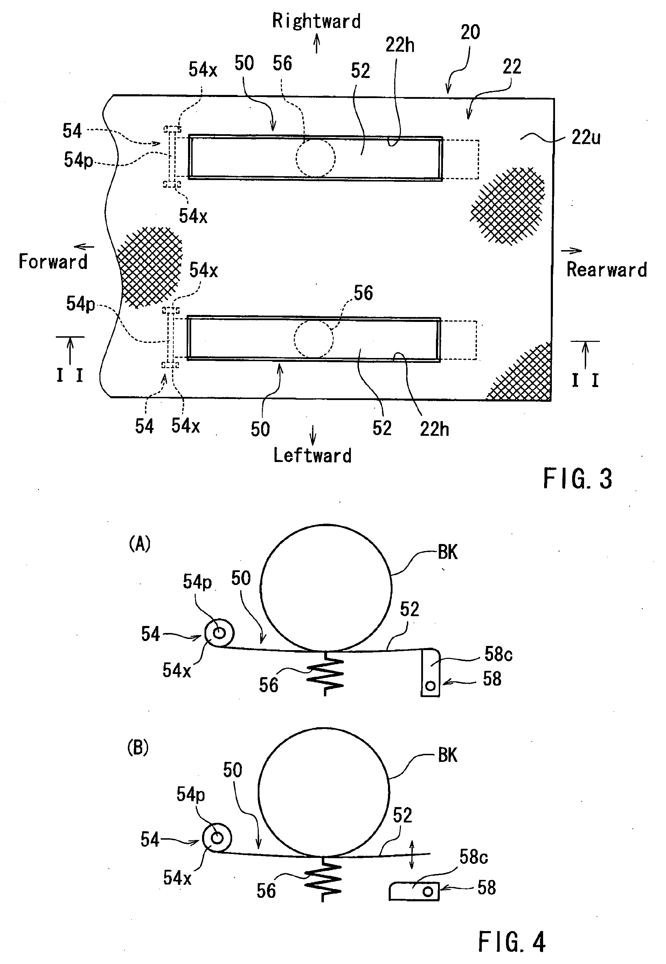

As shown in FIG. 1, the platform 20 is a plate-shaped member having a longitudinally elongated rectangular shape and has a slope plate 21. The slope plate 21 is rotatably connected to a rear end periphery of the platform 20, so as to be rotatable from a laid position to a raised position. The platform 20 has a rectangular base frame (not shown) that constitutes an outer frame. As shown in FIG. 2 and FIG. 3, an upper surface of the base frame is covered by a ceiling plate 22. Further, an upper surface 22u of the ceiling plate 22 may function as a platform surface 22u on which the wheel chair K is loaded. Further, as shown in FIG. 2, the base frame has a lower frame 24 that is attached to a lower side thereof in parallel with the ceiling plate 22. The lower frame 24 is intended to support various devices (which will be hereinafter descried) that are received in an interior space S of the platform 20.

Received in the interior space S of the platform 20 is a lashing device (not shown) that is used to lash the wheelchair K to the platform 20 in a desired position on the platform surface 22u. Further, the platform 20 has a right and left pair of large wheel support portions 50 on which right and left large wheels BK of the wheelchair K are respectively positioned when the wheelchair K is lashed to the platform 20.

### <Structure of Large Wheel Support Portions 50>

The large wheel support portions 50 are portions that are capable supporting the large wheels BK of the wheelchair K in a condition in which vertical vibration of the automobile C can be absorbed. As shown in FIG. 2, the large wheel support portions 50 are constructed of wheel support plates 52, hinge mechanisms 54, springs 56 and lock mechanisms 58. As shown in FIG. 3, the wheel support plates 52 are strip-shaped lid members and are constructed such that the large wheels BK of the wheelchair K can be positioned thereon. The wheel support plates 52 are constructed to close rectangular openings 22h formed in the ceiling plate 22 from inside of the platform 20 (from below). The rectangular openings 22h are formed in desired portions of the ceiling plate 22 so as to extend in the vehicle longitudinal direction. As shown in FIG. 2, the wheel support plates 52 have shoulder portions 52d formed therein. The shoulder portions 52d are positioned adjacent to front ends and rear ends of the wheel support plates 52 so as to extend in widthwise directions of the wheel support plates 52. The shoulder portions 52d are constructed to be received in the rectangular openings 22h in a condition in which the wheel support plates 52 close the rectangular openings 22h of the ceiling plate 22 from below. Further, each of the shoulder portions 52d of the wheel support plates 52 is formed to have a height substantially equal to a thickness of the ceiling plate 22. Therefore, in the condition in which the wheel support plates 52 close the rectangular openings 22h of the ceiling plate 22, upper surfaces of the wheel support plates 52 positioned between the front shoulder portions 52d and the rear shoulder portions 52d can be flush with the platform surface 22u. Further, in this condition, front end peripheries and rear end peripheries of the wheel support plates 52 can contact a rear surface of the ceiling plate 22.

As shown in FIG. 2 and FIG. 3, hinge pins 54p of the hinge mechanisms 54 are fixed to the front ends of the wheel support plates 52 so as to extend in the widthwise directions of the wheel support plates 52. Conversely, pin retainers 54x of the hinge mechanisms 54 are attached to the rear surface of the ceiling plate 22. The pin retainers 54x are positioned on front sides of the rectangular openings 22h and are constructed to rotatably support the hinge pins 54p. The pin retainers 54x are composed of cylindrical bodies and rubber bushes that are closely received in the cylindrical bodies. The hinge pins 54p are inserted into the rubber bushes. Thus, the wheel support plates 52 are capable of rotating (clockwise in FIG 2) on the hinge pins 54p downwardly from upper limit positions in which the wheel support plates 52 close the rectangular openings 22h of the ceiling plate 22. Further, the rubber bushes of the pin retainers 54x can function to absorb rattling produced between the wheel support plates 52 and the ceiling plate 22.

Further, the hinge mechanisms 54 correspond to a support mechanism.

As shown in FIG. 2, central portions of the wheel support plates 52 are supported by the coiled springs 56 from below. The springs 56 are supported on the lower frame 24 of the platform 20 and are biased in directions that move the wheel support plates 52 upwardly. Therefore, due to spring forces of the springs 56, the wheel support plates 52 can be maintained in the upper limit positions in which the wheel support plates 52 close the rectangular openings 22h of the ceiling plate 22.

As shown in FIG. 2, the rear end peripheries of the wheel support plates 52 are constructed to be held by the lock mechanisms 58. The lock mechanisms 58 are mechanisms that are capable of locking the wheel support plates 52 when the wheelchair K is lashed to the platform 20 by the lashing device, so as to prevent the wheel support plates 52 from being rotated downwardly when the wheel support plates 52 are pressed downwardly by the large wheels BK of the wheelchair K. The lock mechanisms 58 are constructed such that locking conditions thereof can be released after the wheelchair K is lashed. The lock mechanisms 58 are composed of base portions 58b that are secured on the lower frame 24 of the platform 20, and cam portions 58c that are vertically rotatably connected to the base portions 58b. The cam portions 58c are members that are capable of supporting the rear end peripheries of the wheel support plates 52 from below. Further, heights of the cam portions 58c are set such that the rear end peripheries of the wheel support plates 52 can be maintained in the upper limit positions when the cam portions 58c are positioned in raised conditions. The raised conditions of the cam portions 58c of the lock mechanisms 58 correspond to the locking conditions of the lock mechanisms 58. In the raised conditions of the cam portions 58c, the springs 56 cannot be applied with loads from the wheel support plates 52 (FIG. 4(A)). Conversely, in laid conditions of the cam portions 58c, the cam portions 58c can be spaced from the rear end peripheries of the wheel support plates 52, so that the wheel support plates 52 can be supported by the springs 56 (FIG 4(B)).

### <Function of Platform 20>

As shown in FIG. 1, in order to load the wheelchair K on the platform 20, the cam portions 58c of the lock mechanisms 58 are raised, so as to maintain the lock mechanisms 58 in the locking conditions (FIG. 2 and FIG. 4(A)). Thus, the wheel support plates 52 of the large wheel support portions 50 can be supported by the hinge mechanisms 54 and the cam portions 58c of the lock mechanisms 58 in front and rear portions thereof, so as to be maintained in conditions (locked conditions) in which the wheel support plates 52 close the rectangular openings 22h of the ceiling plate 22. In this condition, the wheelchair K is moved to the desired position on the platform 20, so that the right and left large wheels BK of the wheelchair K are respectively positioned on the right and left wheel support plates 52. Thereafter, the wheelchair K is lashed to the platform 20 using the lashing device. Thus, the wheelchair K is lashed to the platform 20 while the wheel support plates 52 is locked by the lock mechanisms 58. Therefore, even if the large wheels BK of the wheelchair K press the wheel support plates 52 downwardly due to a lashing force of the lashing device applied thereto, the wheel support plates 52 cannot be displaced downwardly.

After the wheelchair K is lashed to the platform 20, the cam portions 58c of the lock mechanisms 58 are laid, so that the locked condition of the right and left wheel support plates 52 can be released. As a result, as shown in FIG. 4(B), the right and left wheel support plates 52 can be supported by the hinge mechanisms 54 and the springs 56. In this condition, the platform 20 on which the wheelchair K is loaded is retracted into the vehicle cabin by the wheelchair lifter 10.

Thus, the right and left wheel support plates 52 can be supported by the hinge mechanisms 54 and the springs 56. Therefore, the vertical vibration generated, for example, while the automobile C is traveling on a rough road, can be absorbed by the springs 56 and the rubber bushes of the hinge mechanisms 54.

### <Advantages of Platform 20>

According to the platform 20 of the wheelchair lifter 10 of the present example, the right and left pair of large wheel support portions 50 provided to the platform surface 22u are constructed to absorb the vertical vibration of the automobile. Therefore, even if the automobile is lifted, for example, while traveling on the rough road, the large wheel support portions 50 can absorb the vertical vibration caused by the lifting. As a result, the vibration generated, for example, while the automobile is moving on the rough road, can be prevented from being easily transmitted to the wheelchair K. Thus, the passenger sitting on the wheelchair can have a comfortable ride.

Further, only the right and left large wheel support portions 50 are constructed to absorb the vibration. Therefore, a cost reduction can be performed compared with the conventional platform in which the whole platform surface is constructed to be prevented from being vibrated.

Further, the wheel support plates 52 can be locked by the lock mechanisms 58 so as to not be pressed down relative to the platform surface 22u. Therefore, when the wheelchair K is lashed to the platform 20 while the right and left large wheels BK of the wheelchair K are respectively positioned on the wheel support plates 52, the wheel support plates 52 can be prevented from being pressed down against the spring forces of the springs 56 by the lashing force applied to the wheelchair K.

### <Structure of Wheel Support Portions 50>

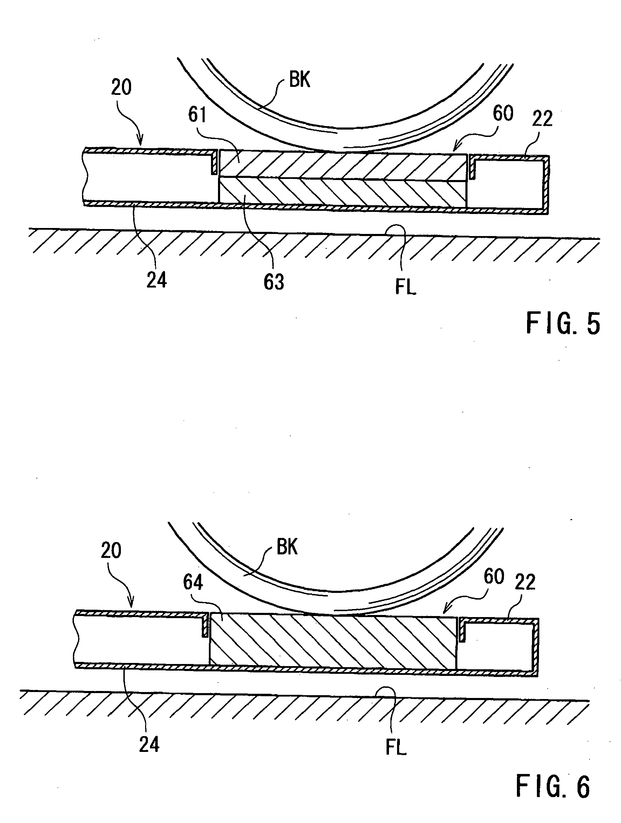

In this example as shown in Fig. 2, the right and left pair of large wheel support portions 50 are constructed of the wheel support plates 52, the hinge mechanisms 54, the springs 56 and the lock mechanisms 58. However, as shown in FIGS. 5 and 6, the large wheel support portions 50 can be replaced with large wheel support portions 60 that are constructed of elastic blocks. For example, as shown in FIG. 5, each of the large wheel support portions 60 can be constructed of a relatively soft rubber plate 63 and a relatively hard rubber plate 61 laminated on the relatively soft rubber plate 63. Further, as shown in FIG. 6, each of the large wheel support portions 60 can be made of urethane form 64 or other such materials. Thus, according to the elastic blocks, the wheelchair K can be prevented from being vibrated with a simplified structure.

### EMBODIMENT

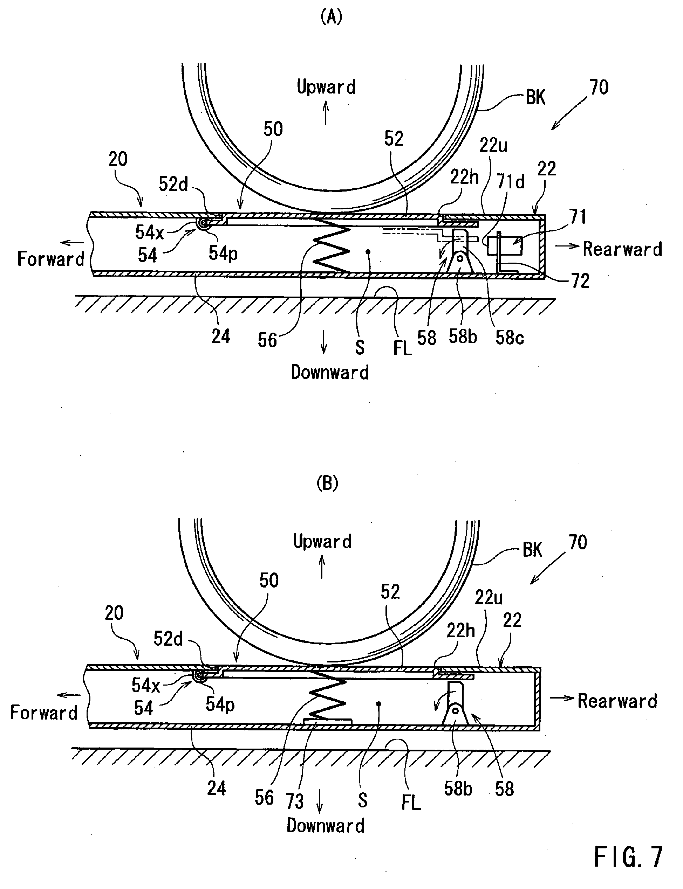

In the following, a wheelchair lifter 70 according to an Embodiment of the present invention is described with reference to FIGS. 7 to 10.

In a general wheelchair lifter, regardless of whether the platform 20 is in a loaded condition in which the wheelchair K is loaded thereon or an unloaded condition in which the wheelchair K is not loaded thereon, a speed (lifting/lowering speed) at which the lifting/lowering link mechanisms 40 move the platform 20 up and down is substantially constant. However, a care assistant that operates the wheelchair lifter wishes to move the platform 20 up and down as quickly as possible when the wheelchair K is not loaded on the platform 20, so as to reduce an operating time of the wheelchair lifter. In consideration of this point, the wheelchair lifter 70 according to the present embodiment has wheelchair detection sensors 71 that are capable of detecting if the wheelchair K is loaded on the platform 20, and the lifting/lowering link mechanisms 40 that are capable of changing the lifting/lowering speed of the platform 20 based on whether the wheelchair K is loaded on the platform 20.

Further, the wheelchair lifter 70 according to the present embodiment has the same construction as the wheelchair lifter 10 according to Embodiment 1 except for the structures described above. Therefore, the same elements as the wheelchair lifter 10 according to Embodiment 1 will be identified by the same reference numerals and a detailed description of such elements will be omitted.

### <Regarding Wheelchair Detection Sensors 71>

As shown in FIG. 7(A), the wheelchair detection sensors 71 are proximity switches that are respectively capable of detecting that the wheel support plates 52 of the large wheel support portions 50 are displaced downwardly relative to the platform surface 22u and identifying that the wheelchair K is positioned on the wheel support plates 52. The wheelchair detection sensors 71 are respectively supported by support members 72 positioned behind the lock mechanisms 58 and secured to the lower frame 24 of the platform 20. The support members 72 are constructed to horizontally support the wheelchair detection sensors 71 at desired levels while detection surfaces 71d of the wheelchair detection sensors 71 are faced forwardly. Further, longitudinal and lateral positions of the wheelchair detection sensors 71 are set such that horizontal distances between the detection surfaces 71d of the wheelchair detection sensors 71 and rear end surfaces of the wheel support plates 52 can be sufficiently smaller than working limit distances of the sensors. Further, vertical positions of the wheelchair detection sensors 71 are determined such that the detection surfaces 71d have the substantially same heights as the rear ends of the wheel support plates 52 when the locking conditions of the lock mechanisms 58 are released and the wheel support plates 52 are displaced downwardly relative to the platform surface 22u due to a weight of the wheelchair K. Therefore, when the wheelchair K is positioned on the wheel support plates 52 and the wheel support plates 52 are displaced downwardly relative to the platform surface 22u, the wheelchair detection sensors 71 can detect the rear end surfaces of the wheel support plates 52, so as to be turned on.

Further, as shown in FIG. 7(B), instead of using the proximity switches as the wheelchair detection sensors 71, load cells 73 can be used to detect the spring forces of the springs 56, thereby detecting that the wheel support plates 52 are displaced downwardly relative to the platform surface 22u due to the weight of the wheelchair K.

Further, the wheelchair detection sensors 71 or the load cells 73 correspond to wheelchair detection means of the present invention.

### <Regarding Lifting/Lowering Link Mechanisms 40>

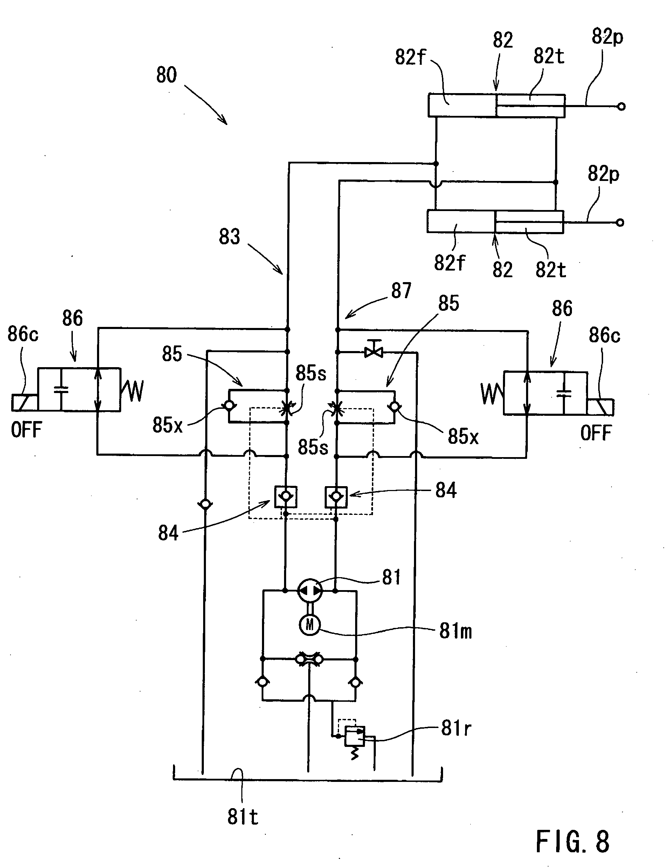

As briefly described in the example (FIG. 1), the lifting/lowering link mechanisms 40 are constructed of the fixture members 41 that are disposed in both ends of the rear portion of the vehicle cabin floor FL, the first links 43 that are vertically rotatably connected to the fixture members 41, the second links 44 that are vertically rotatably connected to the distal end portions of the first links 43, and a hydraulic power unit 80 (FIG. 8). Further, the platform 20 is horizontally connected to the distal end portions of the second links 44 via the longitudinal sliding mechanisms 30.

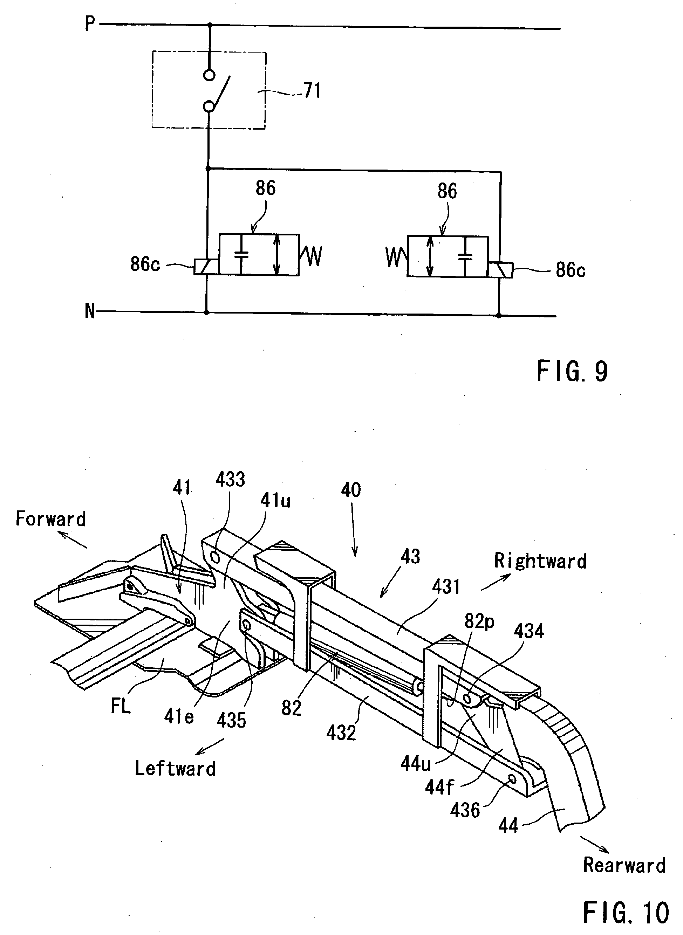

As shown in FIG. 10, the first links 43 are four-joints link mechanisms having upper link portions 431 and lower link portions 432. Proximal end portions of the upper link portions 431 are vertically rotatably connected to upper end portions 41u of the fixture members 41 via first connector pins 433. Further, distal end portions of the upper link portions 431 are vertically rotatably connected to upper end portions 44u of the second links 44 via second connector pins 434. Further, proximal end portions of the lower link portions 432 are vertically rotatably connected to lower rear portions 41e of the fixture members 41 via third connector pins 435. Distal end portions of the lower link portions 432 are vertically rotatably connected to front lower end portions 44f of the second links 44 via fourth connector pins 436. Further, hydraulic cylinders 82 of the hydraulic power unit 80 are disposed between the third connector pins 435 and the second connector pins 434. In particular, proximal end portions of the hydraulic cylinders 82 are connected to the third connector pins 435 and distal end portions of piston rods 82p of the hydraulic cylinders 82 are connected to the second connector pins 434. Thus, when the hydraulic cylinders 82 are actuated to project the piston rods 82p, the first links 43 are rotated upwardly. To the contrary, when the hydraulic cylinders 82 are actuated to retract the piston rods 82p, the first links 43 are rotated downwardly.

### <Regarding Hydraulic Power Units 80>

As shown in FIG. 8, the hydraulic power unit 80 is constructed of the hydraulic cylinders 82 that are attached to the light and left lifting/lowering link mechanisms 40, a lifting hydraulic circuit 83 that is capable of feeding oil to projecting cylinder chambers 82f of the right and left hydraulic cylinders 82, a lowering hydraulic circuit 87 that is capable of feeding the oil to retracting cylinder chambers 82t of the hydraulic cylinders 82, a hydraulic pump 81, and a relief valve 81r.

The hydraulic pump 81 is constructed to feed the oil to the lifting hydraulic circuit 83 when it is rotated in a normal direction by a motor 81m and to feed the oil to the lowering hydraulic circuit 87 when it is rotated in a reverse direction by the motor 81m. Further, when a pressure of the oil ejected from the hydraulic pump 81 exceeds a set pressure, a portion of the oil can be returned to a fuel tank 81t via the relief valve 81r.

The lifting hydraulic circuit 83 and the lowering hydraulic circuit 87 have the same structures as each other and respectively have pilot check valves 84, flow control valves 85 and electromagnetic valves 86. The flow control valves 85 and the electromagnetic valves 86 are positioned downstream of the pilot check valves 84 and are connected in parallel to each other.

The pilot check valves 84 allow oil flows toward the hydraulic cylinders 82 and allow reverse oil flows due to pilot pressures (oil pressures).

The flow control valves 85 are constructed of check valves 85x and squeezing mechanisms 85s that are connected in parallel to each other.

As shown in FIG. 8, the electromagnetic valves 86 are constructed to open flow channels thereof in states (off-states) in which electromagnetic coils 86c are deenergized and to close the flow channels thereof in states (on-states) in which the electromagnetic coils 86c are energized. As shown in FIG 9, the electromagnetic valves 86 (the electromagnetic coils 86c) of the lifting hydraulic circuit 83 and the lowering hydraulic circuit 87 are connected in parallel. Further, positive terminals of the electromagnetic valves 86 are connected to plus terminals (P) of a power source via contact points of the wheelchair detection sensors 71. Conversely, negative terminals of the electromagnetic valves 86 are connected to minus terminals (N) of the power source. Thus, in states (off-states) in which the wheelchair detection sensors 71 do not detect the wheelchair K, the electromagnetic valves 86 are switched to the off-states, so that the flow channels are opened. Conversely, in states (on-states) in which the wheelchair detection sensors 71 detect the wheelchair K, the electromagnetic valves 86 are switched to the on-states, so that the flow channels are closed.

Further, the flow channels of the electromagnetic valves 86 are sufficiently greater than flow channels of the squeezing mechanisms 85s of the flow control valves 85 in area. Therefore, in the states (off-states) in which the flow channels of the electromagnetic valves 86 are opened, the oil is capable of mainly flowing through the electromagnetic valves 86 and is practically incapable of flowing into the squeezing mechanisms 85s of the flow control valves 85.

### <Regarding Function of Wheelchair Lifter 70 of Present Embodiment>

First, an operation to lower the unloaded platform 20 positioned in the retracted position inside the vehicle cabin to the wheelchair loading/unloading position on the ground is described.

Upon operation of the deboarding switch (not shown), the sliding mechanism main portions 33 of the longitudinal sliding mechanisms 30 are actuated, so that the platform 20 can be slid rearwardly. When the platform 20 reaches the projected position outside the cabin, the sliding mechanism main portions 33 are de-actuated.

Next, the hydraulic pump 81 of the hydraulic power unit 80 of the lifting/lowering link mechanisms 40 is rotated in the reverse direction. When the wheelchair K is not loaded on the platform 20, the wheelchair detection sensors 71 are maintained in the off-states. Therefore, the electromagnetic valves 86 of the hydraulic power unit 80 are maintained in the off-states, so that the flow channels are opened. Thus, the oil ejected from the hydraulic pump 81 can be fed to the lowering hydraulic circuit 87 shown in FIG. 8 and then be fed to the retracting cylinder chambers 82t of the right and left hydraulic cylinders 82 via the pilot check valve 84 and the flow channel of the electromagnetic valve 86. Conversely, the oil contained in the projecting cylinder chambers 82f of the hydraulic cylinders 82 can be returned to the hydraulic pump 81 via the flow channel of the electromagnetic valve 86 and the pilot check valve 84 in the lifting hydraulic circuit 83. Further, the pilot check valve 84 of the lifting hydraulic circuit 83 allows the reverse oil flow due to the oil pressure applied thereto.

Thus, because the oil fed to the retracting cylinder chambers 82t of the hydraulic cylinders 82 and the oil returned from the projecting cylinder chambers 82f to the hydraulic pump 81 can flow through the flow channels of the electromagnetic valves 86, the right and left hydraulic cylinders 82 can quickly retract the piston rods 82.

Therefore, the first links 43 of the light and left lifting/lowering link mechanisms 40 can be quickly rotated downwardly, so that the right and left second links 44 and the platform 20 maintained in the horizontal position can be lowered at high speed. Thereafter, when the platform 20 is lowered to the wheelchair loading/unloading position (FIG. 1), the hydraulic pump 81 of the hydraulic power unit 80 is stopped.

Next, an operation to move the platform 20 to the retracted position inside the vehicle cabin after the wheelchair K is loaded on the platform 20 in the wheelchair loading/unloading position is described.

First, as shown in, for example, FIG. 7(A), the wheelchair K is moved to the desired position on the platform 20 while the lock mechanisms 58 are maintained in the locking conditions, so that the right and left large wheels BK of the wheelchair K are respectively positioned on the right and left wheel support plates 52. Thereafter, the wheelchair K is lashed to the platform 20 using the lashing device. After the wheelchair K is lashed to the platform 20, the locking conditions of the lock mechanisms 58 are released. As a result, as shown in FIG. 7(A), the right and left wheel support plates 52 can be supported by the hinge mechanisms 54 and the springs 56, so that the rear ends of the wheel support plates 52 are displaced downwardly relative to the platform surface 22u. As a result, the wheelchair detection sensors 71 can be turned on, so that the electromagnetic coils 86c of the electromagnetic valves 86 can be energized. Consequently, the flow channels of the electromagnetic valves 86 can be closed.

In this condition, upon operation of the boarding switch (not shown), the hydraulic pump 81 of the hydraulic power unit 80 is rotated in the normal direction. As a result, the oil ejected from the hydraulic pump 81 can be fed to the lifting hydraulic circuit 83 and then be fed to the projecting cylinder chambers 82f of the right and left hydraulic cylinders 82 via the pilot check valve 84 and the check valve 85x of the flow control valve 85. Conversely, the oil contained in the retracting cylinder chambers 82t of the hydraulic cylinders 82 can be returned to the hydraulic pump 81 via the squeezing mechanism 85s of the flow control valve 85 and the pilot check valve 84 in the lowering hydraulic circuit 87. Thus, because the oil returned from the retracting cylinder chambers 82t of the hydraulic cylinders 82 to the hydraulic pump 81 can flow through the squeezing mechanism 85s, the right and left hydraulic cylinders 82 can slowly project the piston rods 82. Therefore, the first links 43 of the light and left lifting/lowering link mechanisms 40 can be slowly rotated upwardly, so that the platform 20 can be lifted slowly (at a normal speed) while maintained in the horizontal position. Thereafter, when the wheel chair 20 is lifted to the projected position, the hydraulic pump 81 of the hydraulic power unit 80 is stopped. Subsequently, the sliding mechanism main portions 33 of the longitudinal sliding mechanisms 30 are actuated, so that the platform 20 can be slid forwardly. When the platform 20 reaches the retracted position inside the cabin, the boarding of the wheelchair K is completed.

Further, when an operation to deboard the wheelchair K from the automobile C is performed, the electromagnetic valves 86 are also maintained in the on-states, so that the flow channels are closed. Therefore, the platform 20 can be lowered at the normal speed.

### <Advantages of Wheelchair Lifter 70 of Present Embodiment>

According to the wheelchair lifter 70 of the present embodiment, when the wheelchair K is loaded on the platform 20, the platform 20 can be lifted and lowered at the normal speed. To the contrary, when the wheelchair K is not loaded on the platform 20, the platform 20 can be lifted and lowered at a high speed. Therefore, a lifting/lowering time of the platform 20 can be reduced than when the platform 20 is always lifted and lowered at the normal speed.

### <Modified Forms>

The present invention is not limited to the embodiment described above and can be modified within the scope of the claims. For example, in this embodiment, the hydraulic power unit 80 is used as a drive source of the lifting/lowering link mechanisms 40. However, the hydraulic power unit 80 can be replaced with a combination of a motor and a reducer or other such devices. In this case, a gear ratio of the reducer or a revolution speed of the motor can be changed based on whether the wheelchair K is loaded on the platform 20, so that rotation speeds of the right and left four-joints link mechanisms can be changed.

Further, the proximity switches and the load cells 73 are exemplified as the wheelchair detection sensors 71. However, optoelectronic switches can be used in place of the proximity switches.

Further, in this embodiment, downward displacement of the wheel support plates 52 is detected in order to identify the presence or absence of the wheelchair K. However, deformation sensors can be used to detect that surfaces of the elastic blocks 60 are depressed relative to the platform surface 22u, thereby identifying the presence or absence of the wheelchair K.

## Claims

1. A wheelchair lifter (10) including a platform (20) that is constructed to receive a wheelchair (K) in a desired position thereon and to secure the same thereto and that is capable of being received in a cabin of a vehicle (C), and a moving mechanism (30, 40) that is capable of moving the platform (20) between a retracted position inside the cabin and a wheelchair loading/unloading position on the ground, comprising:
a right and left pair of wheel support portions (50; 60) on which right and left wheels (BK) of the wheelchair (K) are respectively positioned when the wheelchair (K) is secured to the platform (20), the wheel support portions (50; 60) being provided to a platform surface (22u) of the platform (20), and
a wheelchair detection means (71, 73) that is capable of detecting that the wheel support portions (50; 60) are displaced downwardly relative to the platform surface (22u) and identifying that the wheelchair (K) is positioned on the wheel support portions (50; 60),
wherein the right and left pair of wheel support portions (50; 60) are constructed to absorb vertical vibration of the vehicle,
**characterized in that** the moving mechanism (30, 40) changes a moving speed of the platform (20) to a normal speed when the wheelchair detection means (71, 73) detects the wheelchair (K), and
wherein the moving mechanism (30, 40) changes the moving speed of the platform (20) to a speed higher than the normal speed when the wheelchair detection means (71, 73) does not detect the wheelchair (K).

2. The wheelchair lifter as defined in claim 1, wherein the wheel support portions (50) comprise wheel support plates (52) on which the wheels (BK) of the wheelchair (K) are positioned, support mechanisms (54) supporting the wheel support plates (52) so as to be vertically movable relative to the platform surface (22u), spring members (56) biased in directions that move the wheel support plates (52) upwardly when the wheel support plates (52) are pressed downwardly relative to the platform surface (22u) due to a weight of the wheelchair (K), and lock mechanisms (58) constructed to be capable of locking the wheel support plates (52) such that the wheel support plates (52) cannot be pressed down relative to the platform surface (22u) and capable of unlocking the same.

3. The wheelchair lifter as defined in claim 1, wherein the wheel support portions (50; 60) comprise elastic blocks (60) that are constructed to fill in recessed portions formed in the platform surface (22u).

4. The wheelchair lifter as defined in claim 3, wherein each of the elastic blocks (60) is constructed of a plurality of laminated layers (61, 63), wherein upper layers (61) are made of relatively hard materials, and wherein lower layers (63) are made of relatively soft materials.

5. The wheelchair lifter as defined in any one of claims 1 to 4, wherein the moving mechanism (30, 40) comprises a right and left pair of four-joints link mechanisms (43), hydraulic cylinders (82) that are capable of vertically rotating the four-joints link mechanisms (43), and electromagnetic valves (86) that are capable of changing oil flow rates fed to the hydraulic cylinders between higher flow rates and lower flow rates.

## Patentansprüche

1. Rollstuhl - Hebevorrichtung (10), die eine Plattform (20), die derart aufgebaut ist, dass sie einen Rollstuhl (K) in einer gewünschten Position auf ihr aufnehmen und diesen an ihr sichern kann, und die im Stande ist, in einer Kabine eines Fahrzeugs (C) aufgenommen zu werden, und einen Bewegungsmechanismus (30, 40) aufweist, der im Stande ist, die Plattform (20) zwischen einer zurückgezogenen Position im Inneren der Kabine und einer Rollstuhl - Lade/Entladeposition auf dem Boden zu bewegen, aufweisend:
ein rechtes und linkes Paar von Radunterstützungsabschnitten (50; 60), auf denen rechte und linke Räder (BK) des Rollstuhls (K) jeweils positioniert sind, wenn der Rollstuhl (K) an der Plattform (20) gesichert ist, wobei die Radunterstützungsabschnitte (50; 60) an einer Plattformoberfläche (22u) der Plattform (20) vorgesehen sind, und
eine Rollstuhl - Erfassungseinrichtung (71, 73), die im Stande ist, zu erfassen, dass die Radunterstützungsabschnitte (50; 60) relativ zu der Plattformoberfläche (22u) nach unten versetzt sind, und zu identifizieren, dass der Rollstuhl (K) an den Radunterstützungsabschnitten (50; 60) positioniert ist;
wobei das rechte und linke Paar von Radunterstützungsabschnitten (50; 60) für die Absorbierung einer vertikalen Vibration des Fahrzeugs konstruiert sind,
**dadurch gekennzeichnet, dass** der Bewegungsmechanismus (30, 40) eine Bewegungsgeschwindigkeit der Plattform (20) in eine normale Geschwindigkeit ändert, wenn die Rollstuhl - Erfassungseinrichtung (71, 73) den Rollstuhl (K) erfasst, und
wobei der Bewegungsmechanismus (30, 40) die Bewegungsgeschwindigkeit der Plattform (20) in eine Geschwindigkeit ändert, die höher ist als die normale Geschwindigkeit, wenn die Rollstuhl - Erfassungseinrichtung (71, 73) den Rollstuhl (K) nicht erfasst.

2. Rollstuhl - Hebevorrichtung, wie sie im Anspruch 1 definiert ist, wobei die Radunterstützungsabschnitte (50) Radunterstützungsplatten (52), auf denen die Räder (BK) des Rollstuhls (K) positioniert sind bzw. werden, Unterstützungsmechanismen (54), die die Radunterstützungsplatten (52) derart halten, dass sie in vertikaler Richtung relativ zu der Plattformoberfläche (22u) bewegbar sind, Federelemente (56), die in Richtungen vorgespannt sind, die die Radunterstützungsplatten (52) nach oben bewegen, wenn die Radunterstützungsplatten (52) relativ zu der Plattformoberfläche (22u) aufgrund eines Gewichts des Rollstuhls (K) nach unten gedrückt werden, und Verriegelungsmechanismen (58) aufweisen, die dazu konstruiert sind, im Stande zu sein, die Radunterstützungsplatten (52) derart zu verriegeln, dass die Radunterstützungsplatten (52) nicht nach unten relativ zu der Plattformoberfläche (22u) gedrückt werden können, und dass sie im Stande sind, diese zu entriegeln.

3. Rollstuhl - Hebevorrichtung gemäß der Definition im Anspruch 1, bei der die Radunterstützungsabschnitte (50; 60) elastische Blöcke (60) aufweisen, die derart aufgebaut sind, dass sie ausgenommene Abschnitte auffüllen, die in der Plattformoberfläche (22u) ausgebildet sind.

4. Rollstuhl - Hebevorrichtung gemäß der Definition im Anspruch 3, bei der jeder der elastischen Blöcke (60) aus einer Mehrzahl von laminierten Schichten (61, 63) aufgebaut ist, wobei obere Schichten (61) aus relativ harten Materialien hergestellt sind, und bei denen untere Schichten (63) aus relativ weichen Materialien hergestellt sind.

5. Rollstuhl - Hebevorrichtung gemäß der Definition in einem beliebigen der Ansprüche 1 bis 4, bei der der Bewegungsmechanismus (30, 40) ein rechtes und linkes Paar aus vier-gelenkigen Koppelmechanismen (43), hydraulische Zylinder (82), die im Stande sind, die vier-gelenkigen Koppelmechanismen (43) vertikal zu drehen, und elektromagnetische Ventile (86) aufweist, die im Stande sind, Ölströmungsraten, die zu den hydraulischen Zylindern zugeführt werden, zwischen höheren Strömungsraten und niedrigeren Strömungsraten zu ändern.

## Revendications

1. Dispositif de levage (10) pour fauteuil roulant comprenant une plateforme (20) qui est construite pour recevoir un fauteuil roulant (K) dans une position souhaitée sur cette dernière et pour y fixer ce dernier, et qui est capable d'être reçue dans une cabine d'un véhicule (C) et un mécanisme de déplacement (30, 40) qui peut déplacer la plateforme (20) entre une position rétractée à l'intérieur de la cabine et une position de chargement / déchargement de fauteuil roulant sur le sol, comprenant :
une paire droite et gauche de parties de support de roue (50 ; 60) sur lesquelles les roues droite et gauche (BK) du fauteuil roulant (K) sont respectivement positionnées lorsque le fauteuil roulant (K) est fixé sur la plateforme (20), les parties de support de roue (50 ; 60) étant prévues sur une surface de plateforme (22u) de la plateforme (20), et
un moyen de détection de fauteuil roulant (71, 73) qui est capable de détecter que les parties de support de roue (50; 60) sont déplacées vers le bas par rapport à la surface de plateforme (22u) et d'identifier que le fauteuil roulant (K) est positionné sur les parties de support de roue (50 ; 60),
dans lequel la paire droite et gauche de parties de support de roue (50 ; 60) sont construites pour absorber la vibration verticale du véhicule,
**caractérisé en ce que** le mécanisme de déplacement (30, 40) modifie une vitesse de déplacement de la plateforme (20) en une vitesse normale lorsque le moyen de détection de fauteuil roulant (71, 73) détecte le fauteuil roulant (K), et
dans lequel le mécanisme de déplacement (30, 40) modifie la vitesse de déplacement de la plateforme (20) en une vitesse supérieure à la vitesse normale lorsque le moyen de détection de fauteuil roulant (71, 73) ne détecte pas le fauteuil roulant (K).

2. Dispositif de levage pour fauteuil roulant selon la revendication 1, dans lequel les parties de support de roue (50) comprennent des plaques de support de roue (52) sur lesquelles les roues (BK) du fauteuil roulant (K) sont positionnées, des mécanismes de support (54) supportant les plaques de support de roue (52) afin d'être verticalement mobiles par rapport à la surface de plateforme (22u), des éléments de ressort (56) sollicités dans des directions qui déplacent les plaques de support de roue (52) vers le haut lorsque les plaques de support de roue (52) sont poussées vers le bas par rapport à la surface de plateforme (22u) en raison d'un poids du fauteuil roulant (K), et des mécanismes de blocage (58) construits pour pouvoir bloquer les plaques de support de roue (52) de sorte que les plaques de support de roue (52) ne peuvent pas être poussées vers le bas par rapport à la surface de plateforme (22u) et sont capables de débloquer cette dernière.

3. Dispositif de levage pour fauteuil roulant selon la revendication 1, dans lequel les parties de support de roue (50 ; 60) comprennent des blocs élastiques (60) qui sont construits pour remplir des parties évidées formées dans la surface de plateforme (22u).

4. Dispositif de levage pour fauteuil roulant selon la revendication 3, dans lequel chacun des blocs élastiques (60) est construit avec une pluralité de couches stratifiées (61, 63), dans lequel des couches supérieures (61) sont réalisées avec des matériaux relativement durs, et dans lequel des couches inférieures (63) sont réalisées avec des matériaux relativement doux.

5. Dispositif de levage pour fauteuil roulant selon l'une quelconque des revendications 1 à 4, dans lequel le mécanisme de déplacement (30, 40) comprend une paire droite et gauche de mécanismes de liaison à quatre degrés de liberté (43), des vérins hydrauliques (82) qui peuvent faire tourner verticalement les mécanismes de liaison à quatre degrés de liberté (43) et des valves électromagnétiques (86) qui peuvent modifier les débits d'huile amenés aux vérins hydrauliques entre des débits supérieurs et des débits inférieurs.
